# EUROPEAN PATENT SPECIFICATION

(11) **EP 1 232 087 B1**
(45) Date of publication and mention of the grant of the patent: **18.02.2004**
(21) Application number: 00977792.1
(22) Date of filing: 16.11.2000
(51) Int. Cl.: B62D 7/15

(54) **STEERING AXLES DEVICE FOR VEHICLE**
FAHRZEUGLENKACHSEN
DISPOSITIF D'ESSIEUX DIRECTEURS POUR VEHICULE

(30) Priority: 16.11.1999 IT BO990623
(43) Date of publication of application: 21.08.2002
(73) Proprietor: Aerre S.R.L., 61020 Loc. Chiusa di Ginestreto - Pesaro (IT)
(72) Inventor: LUGLI, Andrea, I-61100 Pesaro (IT); RICCI, Roberto, I-61100 Pesaro (IT)
(74) Representative: Negrini, Elena
(86) International application number: PCT/IB2000/001689
(87) International publication number: WO 2001/036251

(56) References cited:
- EP-A- 0 404 422
- EP-A- 0 577 571
- EP-A- 0 895 923
- EP-A- 0 913 317

## Description

### TECHNICAL FIELD

The present invention refers to transport vehicles for goods or passengers provided with steering axles. Particularly the invention refers to a device to steer the steering axle of vehicles.

### BACKGROUND ART

There are known steering axles manually operated by means of mechanical devices, for instance ropes or rods. The main drawback of the known steering axles consists in time wasting due to the manual operation of said axles and further consists in the danger for the operator.

There are known operation devices for steering axles, particularly for bulky vehicles, for vehicles that must have a high handling, including hydraulic means manually controlled, or by means of electric or analog electronic means.

Document EP-A-0 577 571, which comprises the features mentioned in the preamble of claim 1, discloses a reverse steering group for a self-steering axle in trucks comprising a double effect or two single effect hydraulic jack interposed between a transverse body and a shackle bar of the wheels. Hydraulic jack is fed by means of valve means of an electrohydraulic gearcase to move the shackle bar in accordance with the rapport between the steering angle of the vehicle and the angle of wheels connected to the gearcase.

The main drawback of the device of said document, consists in the impossibility to operate with forward direction, limiting the use with the backward direction.

Documents EP-A-0 404 422, EP-A-0 895 923, and EP-A-0 913 317 respectively disclose a method and apparatus for steering a vehicle; a device to steer the rear wheel of a vehicle and an electro-hydraulic power steering control with fluid temperature and motor speed compensation of power steering load signal.

Said documents disclose devices provided with one or more actuators to steer wheel, devices and/or method to control the steering.

A drawback of the devices disclosed in said documents consist in that the jacks - actuators and/or hydraulic circuits can be damaged also in correspondence of a non operation condition of the steering devices because of movements of the jack-actuator pistons transmitted and caused by the bar and wheels.

A further drawback of the known devices is that the operation of the steering axles according to a defined way that forces the angles of the steering axles fixed in comparison with the axles of the steering-gear controlled by the wheel, causing the functionality and use limitation of said devices.

There are known operation devices for steering axles including a hydraulic jack or cylinder positioned between an axle and a steering axle bar in order to steer this latter.

The main drawback of said devices, consists in that the cylinder ends are hinged to the axle and to the bar thus transmitting them transversal stresses that, particularly in a steering direction, have a very high values causing malfunctions and failures.

A further drawback of said last known devices is that, at a parity of hydraulic flow, they generate different steering speed in one direction in comparison with the other one with possible inaccuracies and maneuver slowdowns.

### DISCLOSURE OF THE INVENTION

The main object of the present invention is to propose a device to steer the vehicle steering axle fit to operate in both forward and backward direction at least up to a predefined maximum speed imposed by the regulations in force on the matter.

Further object is to propose a device allowing to steer automatically or manually a plurality of steering axles of the vehicle with steering angles differentiated for each controlled steering axle, and varying according to fixed parameters such as, for instance, the vehicle speed and the movement direction.

Further object is to propose a device fit to transmit to the bar longitudinal stresses and to produce the same steering forces and speeds in both steering directions.

Other object is to propose a device allowing the side translation of the vehicle in both the movement directions.

Further object is to propose a device including autodiagnostic and alarm means to signal anomalies and malfunctions, having besides a sure and brief installation and an easy maintenance.

### BRIEF DESCRIPTION OF THE DRAWINGS

The features of the invention are underlined in the following with particular reference to the attached drawings in which:
- figure 1 shows a schematic view of the steering device, object of the present invention, applied to a steering axle;
- figure 2 shows an enlarged section view of the steering angle sensor means of the device of figure 1;
- figure 3 shows an enlarged schematic view of a variant of the device of figure 1.

### BEST MODE OF CARRYING OUT THE INVENTION

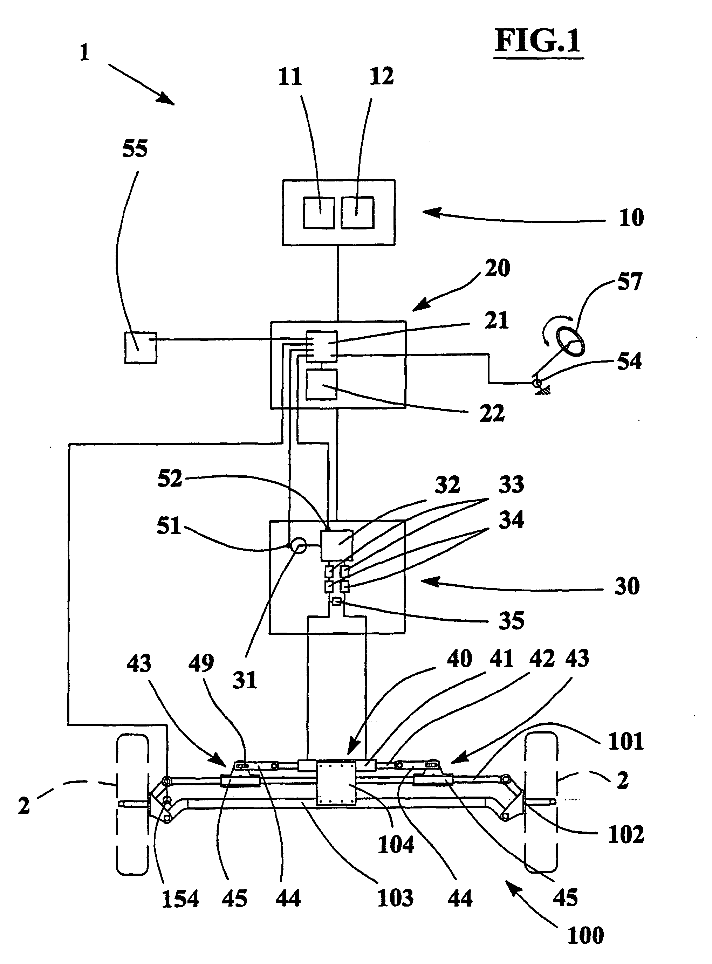

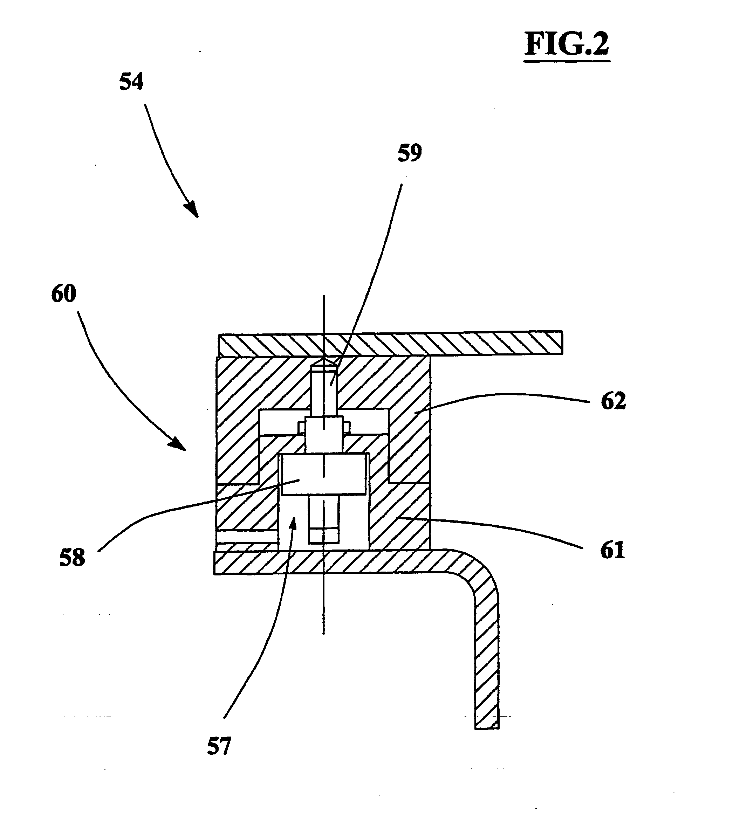

With reference to the figures 1 and 2, numeral 1 indicates a steering device for steering axles 100 of vehicles including user interface means 10, a control unit 20, a hydraulic unit 30, actuator means 40, first 54 and second 154 sensor means of the steering angles and speed sensor means 55.

The steering axles 100, of the parallelogram type, include an axle 103, to whose each ends are hinged hub means 102 rotatably supporting the vehicle wheels 2 and interconnected by means of a bar 101.

One of the steering axles 100 can be steered by means of a steering gear or hydraulic steering box of the vehicle directly driven by steering means 57, for instance consisting of a steering wheel or a cloche or a control stick.

The hydraulic double-acting actuator means 40 are constituted by a double-acting cylinder having two hydraulic inlets connected to the hydraulic unit 30 and including a body 41 fit to transmit forces and axial linear motion to a stem 42 partially hold in the body 41 and protruding at the two free ends.

The body 41 of the hydraulic double-acting actuator means 40 is fixed, by fixing means 104, to the axle means 103. The ends of the stem 42 are connected to the bar 101, by connection means 43. Therefore the hydraulic double-acting actuator means 40 transmit to the bar 101 a force and a motion substantially longitudinal with respect to said bar 101 causing the steering of the axle 100.

The connection means 43 include a "H" shaped connecting rod 44 and a flange 45.

An end of the connecting rod 44 has a couple of faced coaxial holes hinged to an end of the stem 42. The other end of the connecting rod 44 has a couple of longitudinal faced slots 49.

The slots 49 of the connecting rod 44 are connected, by means of a pin, to the flange 45 that is divided in two portions fixed to the bar 101, mutually clamped for instance by screws. The vertical pin, coupling each connecting rod 44 with the related flange 45, slides into the corresponding slot 49 in such a way to transmit a transversal motion to the bar 101.

The hydraulic unit 30 includes a set of electric relays and regulators, known and not shown, for the electric supply of an electric reversible motor 31, to allow both the regulation of the direction and, eventually, the regulation of the rotation speed in such a way to operate the corresponding regulations of the hydraulic flow produced by a reversible hydraulic pump 32 connected to the electric motor 31. The reversible hydraulic pump 32, for instance a gear type pump, has two hydraulic outlets.

The hydraulic unit 30 includes a release valve 35 and overpressure valves 33 and block valves 34.

Each outlet of the reversible hydraulic pump 32 is connected to the related inlet of the hydraulic double-acting actuator means 40 by means of one overpressure valve 33 and one block valve 34 sequentially interposed between each outlet and the related inlet.

The release valve 35 interconnects the inlet of the hydraulic double-acting actuator means 40.

The hydraulic unit 30 is operated, through electric connections, by the digital type control unit 20 that includes, for instance, an industrial computer with passive bus or a ruggedized computer with solid-state memories.

The control unit 20 includes a microprocessor unit, programmable non-volatile memories for the storage of programs, control algorithms and parameters, a plurality of electric switch units, an input/output interface unit.

The input/output interface unit of the control unit has an analog-to-digital conversion unit 22 provided with a signal conditioning unit 21. This latter is connected to signal lines and adjusts the electric analog signal for the input of the analog-to-digital conversion unit 22, so providing the signal conversion compatible with the control unit 20. The input/output interface unit, in case of steering speed control, also includes as many digital-to-analog conversion units as the controlled steering axles 100.

The signal lines connect the control unit 20 to a plurality of speed sensor means 55 of the vehicle, for instance tachographs, sensors associated to the wheel antilock braking systems, speedometers and the like, sensors of temperature 51 and voltage 52 fit to sense, respectively, for instance working temperatures of the motor 31, of the pump 32, of the power supplies or of the electric relays and the voltage of electric elements such as, for instance, the power supplies, the regulators and the electric motor 31.

The speed sensor means 55 such as tachographs, sensors of the wheel antilock braking systems, speedometers and the like can be connected to the control unit 20 both in a direct way, for providing continuous speed data, or by means of known devices, not shown, supplied by the same vehicle manufacturers that provide signals related to speed intervals, for instance a signal indicative of a speed less than 2 Kilometers per hour (Km/h) or 33 Km/h in forward or backward direction respectively.

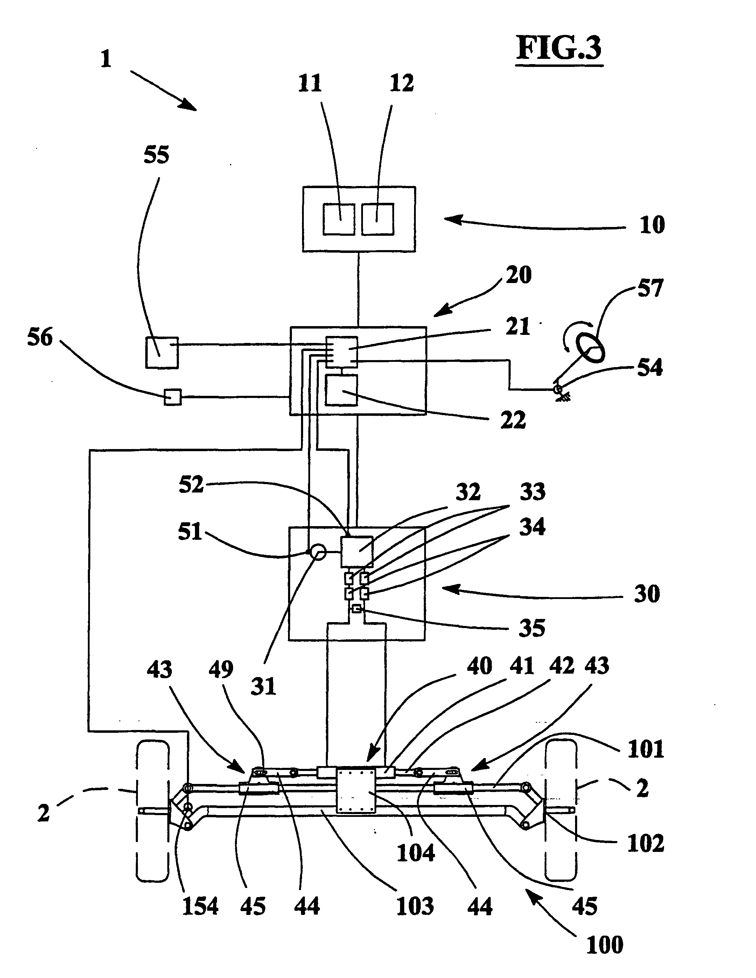

Furthermore, the signal lines connect the steering angle sensor means, first 54 and second 154, respectively connected to the axle 100 directly controlled by the steering means 57 and to the steering axles controlled by the device 1. The figures 1 and 3, for a simple representation, show the first steering angle sensor 54 of the axle 100 directly controlled by the steering means 57, connected to the steering column but and, obviously, the sensor can be connected to the related axle 100.

Each second steering angle sensor 154 of the steering axles 100 includes a watertight container 60 constituted by a hollow body 61 and a cover 62 wherein are fixed respectively a casing 58 and a shaft 59 of a potentiometer 57. The hollow body 61 and the cover 62 are mutually revolving and respectively connected to a fixed part of the vehicle and to the hub means 102.

The control unit 20 is also connected, through electric connections, to user interface means 10 including control means 12, for instance consisting of a LCD display, pilot lamps or acoustical indicators, and command means 11, for instance consisting of a keyboard or a push-button panel, respectively displaying messages and/or signals and/or alarms and allowing the user to operate command signals, for instance activation or deactivation signals, for the device 1.

The operation of the device 1 provides that, following the device 1 activation using the command means 11 and following the sensing of the steering using the sensor means 54, the control unit 20 sends a signal to the hydraulic unit 30 that operates the motor 31 of the pump 32 with the rotation direction corresponding to the steering controlled direction and, then, the hydraulic unit 30 opens the block valves 34 and the control unit 20 commands the closure of the release valve 35 of the hydraulic double-acting actuator means 40. In this way the fluid, pumped into the double-acting hydraulic cylinder, moves the stem 42 of the hydraulic cylinder so that the bar 101 steers the hubs 102 and therefore the wheels 2.

In this condition, the fluid inside the hydraulic circuit flows back from the second hydraulic connection to a reservoir, known and not shown, through the related part of circuit of the hydraulic unit 30.

Obviously, the return of the steering is made by means of the inverse activation of the pump and the inverse flow of the fluid in the hydraulic circuit.

In case of absence of steering signal variations, the control unit 20 sends a related signal to the hydraulic unit 30 so that this latter closes the block valves 34 and the release valve 35 of the hydraulic double-acting actuator means 40 in order to stop the steering angle in that position.

The non-volatile memories of the control unit 20 contain a plurality of programs, selectable by the driver, through the command means 11, and executed by the microprocessor unit fit to calculate, for every steering axle controlled by the device 1, the steering angle corresponding to the steering angle signals, set by the steering means 57, and eventually to the speed signals.

The command signals determine the activation or the deactivation of the device 1 and what kind of steering or, eventually, side translation is set by the user.

The steering angle signals defined by the steering means 57 indicate the direction along which the vehicle must move and therefore the main variable that, together with the position geometric parameters of the steering and fixed axles of the vehicle, is used by the program for calculating the steering angle of every controlled steering axle of the vehicle.

The program also contains maximum speed parameters above which, for safety reason, the steering of the controlled steering axles 100 is not allowed.

By way of example, a simple program, stored in the control unit 20, in correspondence of a predefined speed interval, for instance between 33 Km/h in correspondence of forward motion and 33 Km/n in backward, controls the steering angles of the axles 100 controlled by the device 1, proportional to the signals of steering angle set by steering means 57 and sensed by the steering angle sensor 54.

It is also provided a manual operation program by means of which the driver sets and controls the angles of the axles 100, respectively using the command means 11 and control means 12, these latter for instance graphically displaying the manually set angle.

In the vehicles having exclusively steering axles, an alignment function of all the wheels can be provided allowing the vehicle, in both the movement direction, to translate in the direction of wheel alignment.

The programs, after the calculation of the steering angle of every steering axle 100, may calculate the difference between said calculated value and the value measured by the first steering angle sensor means 54, related to the same axle. According to the difference value the control unit 20 sends the steering commands to the hydraulic unit 30, for instance, by means of a first, a second and a third voltage value respectively corresponding to the right steering, the left steering and no steering variation.

If the hydraulic double-acting actuator means 40 and the hydraulic unit 30 allow a set of steering speeds, the steering commands may consist of, for instance, voltage amplitude-modulated values and the program may generate steering commands proportional to the difference value and, eventually, proportional to the sum of the difference and its temporal derivative.

It is important to notice that the device object of the present invention can also be fit for assuming the total control of the steering elements connecting directly the steering means 57 to the first steering angle sensor 54 and control the main steering axle 100, normally directly controlled by the steering gear, by means of an hydraulic double-acting actuator means 40 and using a program managing the hydraulic unit 30 related to the main steering axle 100 on the basis of the signals provided only by the steering means 57.

The hydraulic unit 30 allows locking in position or to release the hydraulic double-acting actuator means 40 respectively by closing the block valves 34 and the release valve 35, or opening this latter.

The block valves 34 can be operated automatically by the hydraulic unit 30 that, hydraulically, opens the valves only in correspondence of the activation of the pump 32. The release valve 35 can be manually controlled by means of the command means 11.

In the control unit 20 is also provided the automatic running of a program that, in correspondence of a deactivation command of the device 1 or in correspondence of the greatest speed signal overcoming a predefined parameter of maximum speed, sends a steering command with an angle equal to zero for all the steering axles 100 controlled by device 1. Thus the program waits for the achievement of the steering angle equal to zero for all the steering axles 100 controlled by the device 1 and commands the closing of the block valves 34, then provides the device shutdown.

It is also provided that, exceeding said preset maximum speed parameter in correspondence of steering angles of the axles 100 controlled by device 1 different from zero, the program generates alarms through the control means 12 in order to warn the driver about the failed alignment of the axles 100.

If the failed alignment condition of the axles persists with speeds higher than a preset maximum speed parameter and beyond a preset time interval or a preset threshold of danger speed, the program generates a further alarm and commands the complete shutdown of the device.

It is also provided a program that, periodically, during the activation of the device 1, checks the values of the signals coming from the temperature 51 and voltage 52 sensors comparing said value with the preset maximum values.

It is further checked that the difference between the calculated steering angle and the measured steering angle, for every axle, is included within a preset interval.

In case of negative result of one or more checks, the program actives related alarm signals on the control means 12.

The variant of figure 3 provides a connection between the control unit 20 and the movement direction sensor means 56 of the vehicle. These latter can be vehicle means or special means of the device.

In the first case, for instance, said means consists of the positive contact of the backing light or a speedmeter or tachograph fit to provide besides the speed and also the movement direction.

In the second case, for instance, said means may consist of a switch or sensors operated by a lever friction fixed to a hub and constrained between two positions corresponding to the two movement directions.

In this variant the control unit 20 has programs for differently controlling the steering in forward and backward direction. For instance, a program controls the steering the axles 100 in correspondence of speeds ranging from 2 Km/h at forward direction and 33 Km/h at backward direction. Another selectable program can set in forward direction steering axles lower that those set for the backward direction.

It is advantageous to observe that the steering forces applied to the bar 101 by means of two flanges 45 are substantially longitudinal and symmetric and are applied for minimizing the bending and torsional moments to which are submitted the steering axle elements.

The main advantage of the present invention is to provide a device to steer steering axle for vehicles operating in both forward and backward direction at least up to a preset maximum speed imposed by the regulations in force on the matter.

Further advantage is to provide a device allowing to steer a plurality of steering axles of the vehicle or tow in such a way automatically or manually selectable with different steering angles, for each controlled steering axle, and varying according to defined parameters such as, for instance, the vehicle speed and direction.

Other advantage is also to provide a device allowing the side translation of the vehicle in both the movement direction.

Further advantage is to provide a device fit to transmit to the bar longitudinal stresses and to generate steering forces and speeds equal in both the steering direction.

Other advantage is also to provide a device having auto-diagnostic and alarm means for signal alert, having besides a sure and brief installation and an easy maintenance

## Claims

1. Steering axles device for steering axles (100) of vehicles and including at least an axle (103) to whose ends are hinged hub means (102) of vehicle wheels (2) interconnected by means of bar (101), said device (1) including hydraulic double-acting actuator means (40) connected to an hydraulic unit (30) that is linked to a control unit (20) connected to first sensor means (54) of the steering angle set by a steering means (57) of said vehicle and to second sensor means (154) of the steering angle of the steering axles (100), said hydraulic double-acting actuator means (40) have a body (41), fixed to said axle (103) with fixing means (104), and is operated by said hydraulic unit (30) including an electric motor (31) with reversible rotatory motion for driving a reversible hydraulic pump (32) for driving the hydraulic double-acting actuator means (40); the hydraulic unit (30) being controlled by said control unit (20) fit to determine the steering angle of said hub means (102) according to the signals received from said first (54) and second (154) sensor means and from user interface means (10); said device (1) being **characterized in that** said hydraulic double-acting actuator means (40) have a stem (42) passing through said body (41) and having each end connected to said bar (101) by means of connection means (43) including a connecting rod (44) hinged to the end of said stem (42) and having a slot (49) engaged, by means of a pin, to a related flange (45) fixed to the bar (101), to vary the steering angle of said wheels (2).

2. Device according to claim 1 **characterized in that** said control unit (20), includes a microprocessor unit, storage means, a conditioning unit (21) and an analog-to-digital conversion unit (22), said two last units being fit to acquire speed signals from speed sensor means (55), measures of temperature and voltage, deriving from sensors of temperature (51) and voltage (52), and the signals from sensor means, first (54) and second (154).

3. Device according to claim 2 **characterized in that** said speed sensor means (55) are tachographs, sensors associated to antilock braking systems or speedometers.

4. Device according to claim 1 **characterized in that** said hydraulic unit (30) includes a release valve (35), interconnecting inlets of the hydraulic double-acting actuator means (40), and an overpressure valve (33) and a block valve (34) sequentially positioned between each outlet of the hydraulic pump (32) and the related inlet of said hydraulic actuator means (40).

5. Device according to claim 1 **characterized in that** each sensor means, first (54) and second (154), includes a watertight container (60) having a hollow body (61) and a cover (62) wherein are respectively fixed a casing (58) and a shaft (59) of a potentiometer (57), said hollow body (61) and said cover (62) being mutually revolving and respectively connected to the vehicle and to said hub means (102).

6. Device according to claim 1 **characterized in that** said user interface means (10) include control means (12) fit to display messages and/or signals and/or alarms to the user and command means (11) for said control unit (20) activated by the user.

7. Device according to claim 1 **characterized in that** said control unit (20) receives, from sensors of temperature (51) and voltage (52), temperature measures of said hydraulic pump (32) and said electric motor (31), and voltage measures of this latter.

8. Device according to claim 1 **characterized in that** said control unit (20) includes a plurality of programs, manually selectable by means of the command means (11), fit to calculate and to send a corresponding command to the hydraulic unit (30) related to the steering angles of each steering axle (100).

9. Device according to any of the preceding claims **characterized in that** the control unit (20) is connected to movement direction sensor means (56) of the vehicle.

## Patentansprüche

1. Lenkachsenvorrichtung für Lenkachsen (100) von Fahrzeugen und mit mindestens einer Achse (103), an deren Enden Nabenmittel (102) der Fahrzeugräder (102) angelenkt sind, welche mittels einer Stange (101) miteinander verbunden sind, wobei die Vorrichtung (1) hydraulische doppelt wirkende Betätigungsmittel (40) umfasst, die mit einer Hydraulikeinheit (30) verbunden sind, welche mit einer Steuereinheit (20) verknüpft ist, die mit ersten Sensormitteln (54) des durch ein Lenkmittel (57) des Fahrzeuges eingestellten Lenkwinkels und mit zweiten Sensormitteln (154) des Lenkwinkels der Lenkachsen (100) verbunden ist, wobei die hydraulischen doppelt wirkenden Betätigungsmittel (40) einen Körper (41) haben, der an der Achse (103) mit Befestigungsmitteln (104) befestigt ist und durch die Hydraulikeinheit (30) betätigt wird, welche einen elektrischen Motor (31) mit reversierbarer Drehbewegung zum Antreiben einer reversierbaren Hydraulikpumpe (32) umfasst, um die hydraulischen doppelt wirkenden Betätigungsmittel (40) anzutreiben; wobei die Hydraulikeinheit (30) durch die Steuereinheit (20) gesteuert wird, welche in der Lage ist, den Lenkwinkel der Nabenmittel (102) in Abhängigkeit von den Signalen, die von den ersten (54) und zweiten (154) Sensormitteln und von Benutzerschnittstellenmitteln (10) empfangen wurden, zu bestimmen; wobei die Vorrichtung (1) **dadurch gekennzeichnet ist, dass** die hydraulischen doppelt wirkenden Betätigungsmittel (40) einen Schaft (42) haben, der durch den Körper (41) verläuft und an jedem Ende mit der Stange (101) durch Verbindungsmittel (43) einschließlich einer Verbindungsstange (44) verbunden ist, die am Ende des Schaftes (42) angelenkt ist und einen Schlitz (49) hat, der mittels eines Stiftes mit einem an der Stange (101) befestigten zugehörigen Flansch (45) in Eingriff steht, um den Lenkwinkel der Räder (2) zu ändern.

2. Vorrichtung nach Anspruch 1, **dadurch gekennzeichnet, dass** die Steuereinheit (20) umfasst: eine Mikroprozessoreinheit, Speichermittel, eine Konditioniereinheit (21) und eine Analog-Digital-Wandlereinheit (22), wobei die beiden letztgenannten Einheiten in der Lage sind, Geschwindigkeitssignale von Geschwindigkeitssensormitteln (55), Messwerte für Temperatur und Spannung, abgeleitet von Sensoren für Temperatur (51) und Spannung (52), und die Signale von den ersten (54) und zweiten (154) Sensormitteln zu empfangen.

3. Vorrichtung nach Anspruch 2, **dadurch gekennzeichnet, dass** die Geschwindigkeitssensormittel (55) Tachographen, Sensoren, die Antiblockierbremsanlagen zugeordnet sind, oder Geschwindigkeitsmesser sind.

4. Vorrichtung nach Anspruch 1, **dadurch gekennzeichnet, dass** die Hydraulikeinheit (30) ein Freigabeventil (35), das die Einlässe der hydraulischen doppelt wirkenden Betätigungsmittel (40) verbindet, und ein Überdruckventil (33) sowie ein Sperrventil (34) aufweist, die in Reihe geschaltet zwischen jedem Auslass der Hydraulikpumpe (32) und dem zugehörigen Einlass der hydraulischen Betätigungsmittel (40) angeordnet sind.

5. Vorrichtung nach Anspruch 1, **dadurch gekennzeichnet, dass** sowohl das erste (54) wie auch das zweite (154) Sensormittel einen wasserdichten Behälter (60) mit einem Hohlkörper (61) und einem Deckel (62) umfasst, in dem ein Gehäuse (58) und eine Welle (59) des Potentiometers (57) befestigt sind, wobei der Hohlkörper (61) und der Deckel (62) relativ zueinander rotieren und mit dem Fahrzeug bzw. den Nabenmitteln (102) verbunden sind.

6. Vorrichtung nach Anspruch 1, **dadurch gekennzeichnet, dass** die Benutzerschnittstellenmittel (10) Steuermittel (12), die in der Lage sind, Botschaften und/oder Signale und/oder Warnungen für den Benutzer anzuzeigen, sowie Befehlsmittel (11) für die Steuereinheit (20), die vom Benutzer aktiviert werden, umfassen.

7. Vorrichtung nach Anspruch 1, **dadurch gekennzeichnet, dass** die Steuereinheit (20) von Sensoren für Temperatur (51) und Spannung (52) Temperaturmesswerte der Hydraulikpumpe (32) und des elektrischen Motors (31) sowie Spannungsmessungen des letzteren empfängt.

8. Vorrichtung nach Anspruch 1, **dadurch gekennzeichnet, dass** die Steuereinheit (20) mehrere mit Hilfe der Befehlsmittel (11) manuell wählbare Programme enthält, die in der Lage sind, einen zu den Lenkwinkeln jeder Lenkachse (100) in Beziehung stehenden entsprechenden Befehl zu berechnen und an die Hydraulikeinheit (30) abzugeben.

9. Vorrichtung nach einem der vorhergehenden Ansprüche, **dadurch gekennzeichnet, dass** die Steuereinheit (20) mit Bewegungsrichtungs-Sensormitteln (56) des Fahrzeugs verbunden ist.

## Revendications

1. Dispositif d'essieux directeurs pour des essieux directeurs (100) de véhicules et comprenant au moins un essieu (103) aux extrémités duquel sont articulés des moyens formant moyeux (102) de roues (2) du véhicule, raccordés entre eux au moyen d'une barre (101), ledit dispositif (1) comprenant des moyens formant actionneur hydraulique à double effet (40) raccordés à une unité hydraulique (30) qui est reliée à une unité de commande (20) raccordée à des premiers moyens formant capteur (54) de l'angle de braquage réglé par des moyens de braquage (57) dudit véhicule et à des seconds moyens formant capteur (154) de l'angle de braquage des essieux directeurs (100), lesdits moyens formant actionneur hydraulique à double effet (40) comportant un corps (41) fixé audit essieu (130) par des moyens de fixation (104) et étant actionnés par ladite unité hydraulique (30) incluant un moteur électrique (31) exécutant un mouvement de rotation réversible pour l'entraînement d'une pompe hydraulique réversible (32) servant à entraîner les moyens formant actionneur hydraulique à double effet (40); l'unité hydraulique (30) étant commandée par ladite unité de commande (20) montée de manière à déterminer l'angle de braquage desdits moyens formant moyeu (102) en fonction des signaux reçus par lesdits premiers moyens formant capteur (54) et lesdits seconds moyens formant capteur (154) et en provenance de moyens d'interface d'utilisateur (10); ledit dispositif (1) étant **caractérisé en ce que** lesdits moyens formant actionneur hydraulique à double effet (40) possèdent une tige (42) qui traverse ledit corps (41) et dont chaque extrémité est raccordée à ladite barre (101) par des moyens de raccordement (43) incluant une tige de raccordement (44) articulée à l'extrémité de ladite tige (42) et ayant une fente (49) coopérant au moyen d'une goupille, avec une bride associée (45)-fixée à la barre (101), de manière à modifier l'angle de braquage desdites roues (2).

2. Dispositif selon la revendication 1, **caractérisé en ce que** ladite unité de commande (20) inclut une unité à microprocesseur, des moyens de mémorisation, une unité de conditionnement (21) et une unité de conversion analogique/numérique (22), lesdites deux dernières unités étant montées de manière à acquérir des signaux de vitesse provenant de moyens formant capteur de vitesse (55), des mesures de température et de tension, obtenues à partir de capteurs de température (51) et de tension (52), et des signaux provenant des moyens formant capteurs, à savoir les premiers (54) et les seconds (154).

3. Dispositif selon la revendication 2, **caractérisé en ce que** lesdits moyens formant capteur de vitesse (55) sont des tachymètres, des capteurs associés à des systèmes de freinage à antiblocage ou des compteurs de vitesse.

4. Dispositif selon la revendication 1, **caractérisé en ce que** ladite unité hydraulique (30) inclut une soupape de détente (35), qui raccorde entre elles des entrées des moyens formant actionneur hydraulique à double effet (40), et une soupape de surpression (33), et une soupape de blocage (34), disposées séquentiellement entre chaque sortie de ladite pompe hydraulique (32) et l'entrée associée desdits moyens formant actionneur hydraulique (40).

5. Dispositif selon la revendication 1 **caractérisé en ce que** chacun des moyens formant capteur, les premiers moyens (54) et les seconds moyens (154), incluent un récipient étanche à l'eau (60) comportant un corps creux (61) et un capot (62), et dans lequel sont fixés respectivement un boîtier (58) et un arbre (59) d'un potentiomètre (57), ledit corps creux (61) et ledit capot (62) tournant mutuellement et étant raccordés respectivement au véhicule et auxdits moyens formant moyeu (102).

6. Dispositif selon la revendication 1, **caractérisé en ce que** lesdits moyens d'interface d'utilisateur (10) incluent des moyens de commande (12) montés de manière à afficher des messages et/ou des signaux et/ou des alarmes pour l'utilisateur, et des moyens de commande (11) pour ladite unité de commande (20) activée par l'utilisateur.

7. Dispositif selon la revendication 1, **caractérisé en ce que** ladite unité de commande (20) reçoit, de la part de capteurs de température (51) et de tension (52), des mesures de tension de ladite pompe hydraulique (32) et dudit moteur électrique (31) et des mesures de tension de ce dernier.

8. Dispositif selon la revendication 1, **caractérisé en ce que** ladite unité de commande (20) inclut une pluralité de programmes, pouvant être sélectionnés manuellement à l'aide des moyens de commande (11), adaptés pour calculer et envoyer une commande correspondante à l'unité hydraulique (30) associée aux angles de braquage de chaque essieu directeur (100).

9. Dispositif selon l'une quelconque des revendications précédentes, **caractérisé en ce que** l'unité de commande (20) est raccordée à des moyens (56) formant capteur de direction de déplacement du véhicule.
